# EUROPEAN PATENT APPLICATION

(11) **EP 2 814 080 A1**
(43) Date of publication of application: **17.12.2014**
(21) Application number: 13194526.3
(22) Date of filing: 26.11.2013
(51) Int. Cl.: H01M 2/02

(54) **Flexible battery**

(30) Priority: 14.06.2013 US 201361835031 P; 21.10.2013 US 201314058611
(71) Applicant: Samsung SDI Co., Ltd., Yongin-si, Gyeonggi-do (KR)
(72) Inventor: Jung, Kangkook, Gyeonggi-do (KR); Kang, S. Elena, Gyeonggi-do (KR)
(74) Representative: Taor, Simon Edward William

(57) **Abstract**

An embodiment of the present invention provides a flexible battery, which can be designed in a desired form. The flexible battery includes an electrode assembly longer in a first direction than in a second direction; a sealing member wrapping the electrode assembly in a direction crossing the first direction of the electrode assembly; and an outer case surrounding the electrode assembly and the sealing member.

## Description

Embodiments relate to a flexible battery.

Recently, with the development of lightweight and small-sized mobile electronic devices, batteries for supplying power to the mobile electronic devices are increasingly demanded to be miniaturized and light in weight for both driving use or back-up use. In addition, it is also necessary to efficiently use a receiving space in an electronic device. To cope with these requirements, lithium ion secondary batteries which have a high energy density or output density and are rechargeable are often used.

It is a feature of an embodiment to provide a flexible battery, which can be designed in a desired form.

In accordance with an embodiment of the present invention, there is provided a flexible battery, which can be designed in a desired form. The flexible battery includes an electrode assembly longer in a first direction than in a second direction; a sealing member wrapping the electrode assembly in a direction crossing the first direction of the electrode assembly; and an outer case surrounding the electrode assembly and the sealing member.

Here, the first direction and the second direction are perpendicular to each other.

An aspect ratio of a length of the first direction of the electrode assembly to a length of the second direction may be 10:1 to 100:1.

The electrode assembly may include a first electrode plate, a second electrode plate and a separator interposed therebetween, the first electrode plate, the second electrode plate and the separator may be wound in the first direction using the second direction as a winding shaft. The first electrode plate, the second electrode plate and the separator of the electrode assembly may be stacked in a third direction perpendicular to the first and second directions. The first electrode plate, the second electrode plate and the separator of the electrode assembly may be wound in the second direction using the first direction as a winding shaft. A first tab may be connected to the first electrode plate and a second tab may be connected to the second electrode plate. The first and second tabs may extend to the outside of the outer case. The first and second tabs may extend to the outside of the outer case in the first direction. In addition, the first and second tabs may extend to the outside of the outer case in the second direction. Here, the first electrode plate and the second electrode plate may have opposite polarities.

The sealing member has a right angle, an obtuse angle or an acute angle in the first direction of the electrode assembly and may wrap the electrode assembly.

The outer case may include a metal layer and an insulation layer formed on a surface of the metal layer.

The outer case may include a first outer case surrounding a portion of the electrode assembly and the sealing member, and a second outer case surrounding another portion of the electrode assembly and the sealing member. Fused regions may be formed in exterior sides of the electrode assembly and the sealing member in the first outer case and the second outer case.

The outer case may be in the form of a pouch.

The flexible battery may be in the form of one of a triangle, a rectangle, a pentagon, a hexagon, a trapezoid, a circle, an ellipse, a spiral, a meander, a serration, and a sinusoid.

As described above, the flexible battery according to the embodiment of the present invention can be designed in various forms according to space characteristics of an external set in which batteries are mounted.

For example, the flexible battery according to the present invention can be received in a variety of curved receiving regions formed in the external set, including receiving regions shaped of a triangle, a rectangle, a pentagon, a hexagon, a trapezoid, a circle, an ellipse, a spiral, a meander, a serration, and a sinusoid.

According to an aspect of the invention, there is provided a flexible battery comprising: a electrode assembly comprising a first electrode plate, a second electrode plate and a separator interposed between the first electrode plate and the second electrode plate; a sealing member arranged around the electrode assembly; and an outer case surrounding the electrode assembly and the sealing member; wherein the electrode assembly is longer in a first direction than in a second direction. Preferred features are set out in claims 2 to 13.

According to another aspect of the invention, there is provided an electronic device as set out in claim 14. Preferred features are set out in claim 15.

According to another aspect of the invention, there is provided a flexible battery comprising: a electrode assembly comprising a first electrode plate, a second electrode plate and a separator interposed between the first electrode plate and the second electrode plate; wherein the electrode assembly is longer in a first direction than in a second direction, and wherein the flexible battery is bent to form a shape suitable for conforming to a shape of a receiving region in an electronic device.

Therefore, according to some embodiments of the present invention, a space of the external set, occupied by the battery, does not restrict the design of the external set or the architecture of a circuit, so that the external set may have a wider variety of shapes and may be further miniaturized, slimmer and lighter in weight.
Figs. 1a to 1c are a perspective view, a partially enlarged perspective view, and a cross-sectional view illustrating a flexible battery according to an embodiment of the present invention, and Fig. 1d is a perspective view illustrating an electrode assembly and a sealing member in the flexible battery according to an embodiment of the present invention;
Fig. 2 is a partially enlarged perspective view illustrating an electrode assembly of the flexible battery according to an embodiment of the present invention;
Fig. 3 is a partially enlarged perspective view illustrating an electrode assembly of a flexible battery according to another embodiment of the present invention;
Fig. 4 is a partially enlarged perspective view illustrating an electrode assembly of a flexible battery according to still another embodiment of the present invention;
Fig. 5 is a partially enlarged perspective view illustrating an electrode assembly of a flexible battery according to still another embodiment of the present invention;
Figs. 6a to 6c are a perspective view, a partially enlarged perspective view, and a cross-sectional view illustrating a flexible battery according to still another embodiment of the present invention, and Fig. 6d is a perspective view illustrating an electrode assembly and a sealing member in the flexible battery according to still another embodiment of the present invention;
Figs. 7a to 7m are plan views illustrating two-dimensional warp of a flexible battery according to still another embodiment of the present invention;
Fig. 8 plan views illustrating three-dimensional warp of a flexible battery according to still another embodiment of the present invention;
Figs. 9a and 9b are a rear view and a cross-sectional view illustrating an external set having a flexible battery according to the present invention mounted therein;
Fig. 10 is a rear view illustrating another external set having a flexible battery according to the present invention mounted therein; and
Figs. 11a and 11b are cross-sectional views illustrating a first or second electrode plates according to another embodiment of the present invention.

Hereinafter, examples of embodiments of the invention will be described in detail with reference to the accompanying drawings.

The present invention may be embodied in many different forms and should not be construed as being limited to the embodiments set forth herein. Rather, these embodiments of the invention are provided so that this disclosure will be thorough and complete and will fully convey the concept of the invention to those skilled in the art, and the present invention will only be defined by the appended claims.

In the drawings, the thickness of layers and regions are exaggerated for clarity. Here, like reference numerals refer to like elements throughout. As used herein, the term "and/or" includes any and all combinations of one or more of the associated listed items.

In addition, the terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

In addition, the term "separator" used herein includes a separator commonly used for a liquid electrolyte battery using a liquid electrolyte having little affinity to the separator. Further, the term "separator" used herein includes an intrinsic solid polymer electrolyte and/or a gel solid polymer electrolyte, in which an electrolyte is firmly bound to a separator, so that the electrolyte and the separator should be interpreted as being identical with each other. Therefore, the meaning of the separator should be defined as having a meaning that is consistent with their meaning in the context of the present disclosure.

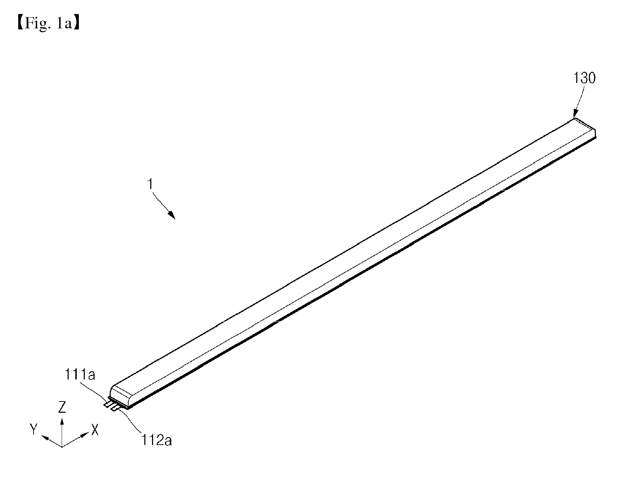

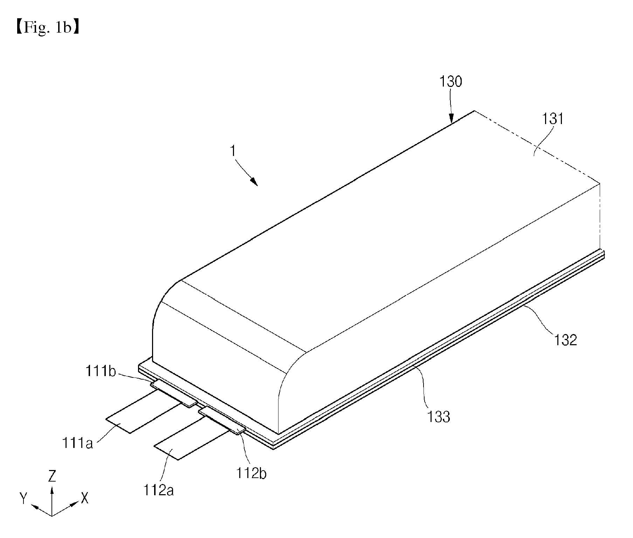

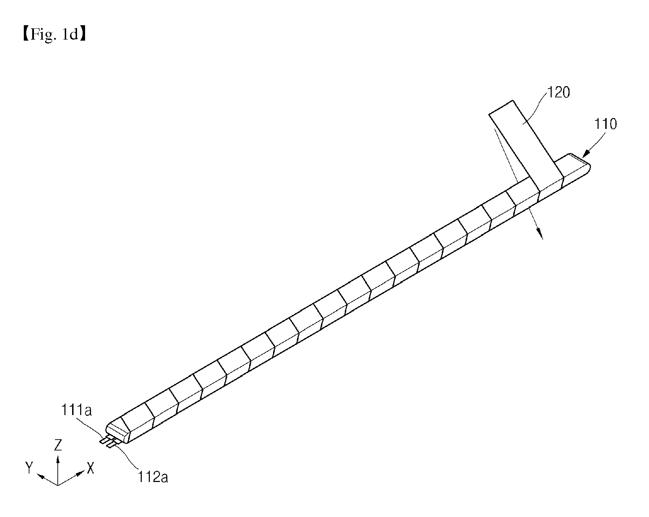

Figs. 1a to 1c are perspective views, a partially enlarged perspective view, and a cross-sectional view illustrating a flexible battery according to an embodiment of the present invention, and Fig. 1d is a perspective view illustrating an electrode assembly and a sealing member in the flexible battery according to an embodiment of the present invention.

As illustrated in Figs. 1a to 1d, the flexible battery 1 according to this embodiment of the present invention includes a rechargeable electrode assembly 110, a sealing member 120 wrapping the electrode assembly 110 and an outer case 130 protecting the electrode assembly 110 from external environments.

The electrode assembly 110 is longer in a first direction than in a second direction. For example, an aspect ratio of a first-direction length to a second-direction length of the electrode assembly 110 may be in a range of approximately 10:1 to 100:1, but embodiments of the present invention are not limited thereto. Here, the first direction and the second direction are perpendicular to each other.

The electrode assembly 110 includes a first electrode plate 111, a second electrode plate 112 and a separator 113 interposed therebetween. The first electrode plate 111, the second electrode plate 112 and the separator 113 may be wound in the first direction. That is to say, the electrode assembly 110 may be wound in the first direction using the second direction as a winding shaft. Accordingly, the electrode assembly 110 may be easily warped in a third direction perpendicular to the first and second directions. In an exemplified embodiment, assuming that the first direction is defined as the X axis, the second direction is defined as the Y axis, and the third direction is defined as the Z axis, the electrode assembly 110 is wound in the first direction using the Y axis as a winding shaft. Accordingly, the electrode assembly 110 may be easily warped in the Z axis. In addition, the electrode assembly 110 may have a rectangular or square cross-sectional shape, but embodiments of the present invention are not limited thereto.

In an exemplified embodiment, a ratio of a width to a thickness in the cross-section of the electrode assembly 110 (or a ratio of a Y-axis length to a Z-axis length) is approximately in a range of 0.5:1 to 1.5:1. More preferably, a ratio of the width to the thickness of the electrode assembly 110 may be approximately 1:1. That is to say, if the cross-section of the electrode assembly 110 is substantially rectangular, suggesting that the degree of freedom increases, the flexibility of the electrode assembly 110 is improved.

As described above, the thickness of the flexible battery 1 may be defined in the third direction (e.g., the Z axis), the width of the flexible battery 1 may be defined in the second direction (e.g., the Y axis).

In addition, the first electrode plate 111 may be a positive electrode plate, and the second electrode plate 112 may be a negative electrode plate, and vice versa. In addition, the first electrode plate 111 may include a first current collector (not shown) and a first active material (not shown), and the second electrode plate 112 may include a second current collector (not shown) and a second active material (not shown).

The first electrode plate 111 is formed by coating a first active material made of a metal oxide, a metal sulfide or a specific polymer on the first current collector.

The first current collector may include, for example, aluminum, titanium, or an alloy thereof. In addition, the first current collector may be in the form of a thin film, a lath, a punched metal, or a net. In order to implement the flexible battery 1 as a thin film battery, a thickness of the first current collector may be smaller than, for example, 20 µm.

In addition, a first tab 111a is formed in the first current collector to extend a predetermined length to the outside of the outer case 130. The first tab 111a may also include, for example, aluminum, titanium, or an alloy thereof, and a partial region of the periphery thereof may be covered by a first insulation film 111b so as not to be shorted from the metal layer of the outer case 130.

The first active material used may vary according to the kind of battery manufactured, but not particularly limited. For example, in a case of manufacturing a lithium battery or a lithium ion battery, any material that is capable of intercalating and deintercalating lithium ions can be used as the first active material, but not particularly limited. In detail, the first active material may include a metal sulfide or oxide not containing lithium, such as TiS₂, MoS₂, NbSe₂, or V₂O₅, or a lithium composite oxide represented by a general formula LixMO₂, where M is one or more transition metals, and generally 0.05≤X≤1.10 according to the charged or discharged state of battery. Here, the transition metal M may be Co, Ni, or Mn. Specific examples of the lithium composite oxide may include LiCO₂, LiNiO₂, LiNYCo₁-YO₂ (o < Y < 1), or LiMn₂O₄. The lithium composite oxide may generate a high voltage and has a superior energy density.

In particular, lithium cobalt oxide or lithium nickel oxide may be used as the first active material because a high voltage and a high volume density can be attained and good cycle life characteristics are exhibited. The lithium composite oxide can be prepared by pulverizing and mixing carbonate, acetate, oxide or hydride of lithium, carbonate, acetate, oxide or hydride of cobalt, manganese or nickel according to a desired composition ratio and sintering the mixture at a temperature in a range of 600 to 1000°C in an oxygen atmosphere. In addition, when an electrode is formed using the aforementioned first active material, a conductive agent or a binder that is widely used in the art may be further added.

The second electrode plate 112 is formed by coating a second active material on the second current collector in this embodiment.

The second current collector may include, for example, copper, nickel, or an alloy thereof. In addition, the second current collector may be in the form of a thin film, a lath, a punched metal, or a net. In order to implement the flexible battery 1 as a thin film battery, a thickness of the second current collector may be smaller than, for example, 20 µm.

In addition, a second tab 112a is formed in the second current collector to extend a predetermined length to the outside of the outer case 130. The second tab 112a may also include, for example, copper, nickel, or an alloy thereof, and a partial region of the periphery thereof may be covered by a second insulation film 112b so as not to be shorted from the metal layer of the outer case 130.

The second active material used may vary according to the kind of battery manufactured, and embodiments of the invention are not limited thereto. For example, in a case of manufacturing a lithium secondary battery, any material that is capable of doping and undoping lithium ions, such as a hardly graphitizable carbon-based material or a graphite-like carbon material, can be used as the second active material, but embodiments of the invention are not limited thereto. In more detail, the second active material may be a carbonaceous material, including an organic polymer compound sintered product, carbon fiber, or activated carbon, prepared by sintering pyrolyzed carbons, cokes such as pitch cokes, needle cokes or petroleum cokes, graphites, glass-like carbons, phenol resin, furane resin, etc. at an appropriate temperature, and carbonizing the same. In addition, examples of the material capable of doping and undoping lithium ions may include a polymer such as polyacetylene or polypyrrole, or an oxide such as SnO₂. When an electrode is formed using the aforementioned second active material, a conductive agent or a binder that is widely used in the art may be further added.

The separator 113 may include, but not limited to, a porous polyolefin based separator or a ceramic separator. The polyolefin based separator may have a three-layered cylindrical pore structure of polypropylene (PP)/polyethylene (PE)/PP, or a single-layered net pore structure of PP or PE. In addition, the ceramic separator may be obtained by coating ceramic on a surface of the polyolefin based separator polyolefin based separator or coating ceramic on a surface of non-woven fabric. The ceramic may be generally alumina.

In addition, a polymer electrolyte layer may be used as the separator 113. In this case, the polymer electrolyte layer may completely surround only the second electrode plate (negative electrode plate) 112. The polymer electrolyte layer may include, but embodiments of the invention not limited to, polymer solid electrolytes having a film separating characteristic, or gel electrolytes having a plasticizer added thereto.

Although not shown, when the separator does not include a polymer electrolyte layer, a separate electrolyte is required. The electrolyte used in the flexible battery 1 includes a lithium salt dissolved in a nonprotonic solvent, or a mixed solvent having two or more kinds of these solvents. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiSbF₆, LiAlO₄, LiAlCl₄, LiN(CₓF₂ₓ₊₁SO₂)(C_{y}F_{2y+1}SO₂) where, x and y are natural numbers, LiCl, Lil, or a mixture thereof, and examples of the nonprotonic solvent may include propylene carbonate, ethylene carbonate, butylenes carbonate, benzonitrile, acetonitrile, tetrahydrofuran, 2-methyltetrahydrofuran, γ-butyrolactone, dioxolane, 4-methyldioxolane, N,N-dimethylformamide, dimethylacetoamide, dimethylsulfoxide, dioxane, 1,2-dimethoxyethane, sulforane, dichloroethane, chlorobenzene, nitrobenzene, dimethylcarbonate, methylethylcarbonate, diethylcarbonate, methylpropylcarbonate, methylisopropylcarbonate, ethylbutylcarbonate, dipropylcarbonate, diisopropylcarbonate, dibutylcarbonate, diethyleneglycol, dimethylether, or a mixture thereof.

Meanwhile, in embodiments of the present invention, the electrode assembly 110 is required to be flexibly deformable. To this end, the first current collector and/or the second current collector may be of a mash type. Alternatively, the first current collector and/or the second current collector may be of a foam type. For example, the first current collector may be made of foamed aluminum, and the second current collector may be made of foamed copper and/or foamed nickel. In particular, the second current collector (negative electrode plate) may be made of a carbon fiber. In this case, the second current collector itself is capable of doping and undoping lithium ions, which is advantageous in view of battery capacity.

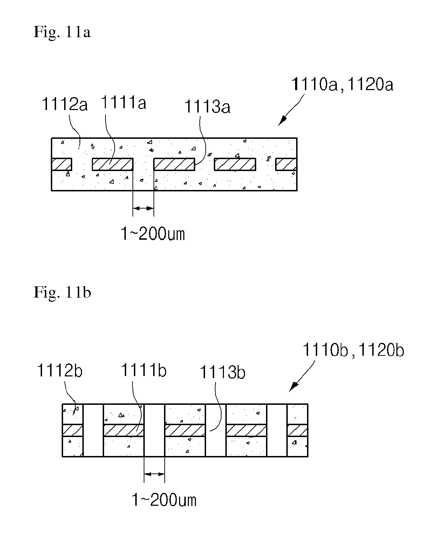

In addition, in order to increase the flexibility of the electrode assembly 110, a plurality of fine throughholes 1113a may be arranged in a first or second electrode plate 1110a or 1120a, as shown in Fig. 11a. For example, the plurality of fine throughholes 1113a having a diameter of approximately 1 to 200 µm may be arranged in the first or second current collector 1111a. Here, an active material 1112a fills the fine through holes 1113a in the first or second current collector 1111a.

In addition, in order to further increase the flexibility of the electrode assembly 110, a plurality of fine through holes 1113b may be arranged throughout the first and second active materials 1112b as well as the first or second current collector 1111b in a first or second electrode plate 1110b or 1120b, as shown in Fig. 11b. That is to say, the plurality of fine through holes 1113b may be formed while passing through the first or second electrode plate 1110b or 1120b. For example, a plurality of fine through holes 1113b having a diameter of approximately 1 to 200 µm may be arranged in the first or second electrode plate 1110b or 1120b.

In addition, in order to improve the flexibility of the electrode assembly 110, all of the aforementioned configurations may be applied to one electrode assembly 110.

In the battery manufacturing process, the sealing member 120 may wrap the electrode assembly 110 so as to allow the electrode assembly 110 to maintain a predetermined shape. In an exemplary embodiment, the sealing member 120 forms a right angle, an obtuse angle or an acute angle with respect to the first direction of the electrode assembly 110 and wraps the electrode assembly 110. That is to say, the sealing member 120 may wrap the electrode assembly 110 while forming forms a right angle, an obtuse angle or an acute angle with respect to the winding direction of the electrode assembly 110. In particular, the sealing member 120 is wound multiple times to form an obtuse angle or an acute angle, instead of a right angle, with respect to the first direction of the electrode assembly 110, thereby improving the flexibility of the electrode assembly 110. That is to say, the sealing member 120 having a smaller width than a length of the electrode assembly 110 is wound multiple times to form an obtuse angle or an acute angle with respect to the first direction of the electrode assembly 110, thereby improving the flexibility of the electrode assembly 110.

The sealing member 120 may be made of one selected from the group consisting of polyethylene (PE), polypropylene (PP), polyimide (PI) or a mixture thereof. In addition, the sealing member 120 may be a thermally shrinkable tape. In an exemplary embodiment, the thermally shrinkable tape may be made of one selected from the group consisting of polyethylene terephthalate (PET), polytrimethylene terephthalate (PTT) or a mixture thereof.

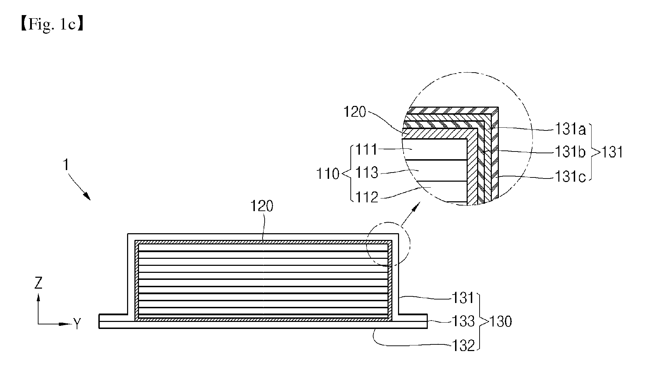

The outer case 130 surrounds the electrode assembly 110 and the sealing member 120, thereby protecting the same from external environments. That is to say, the outer case 130 may be in the form of a pouch or an envelope. In addition, the outer case 130 includes a first outer case 131 surrounding a portion (e.g., a roughly top portion) of the electrode assembly 110 and the sealing member 120, and a second outer case 132 surrounding another portion (e.g., a roughly bottom portion) of the electrode assembly 110 and the sealing member 120. In addition, the outer case 130 may further include a fused region 133 formed between the electrode assembly 110 and the sealing member 120. While Fig. 1c illustrates a receiving area of the electrode assembly 110 is formed only in the first outer case 131 and the fused region 133 is formed at a roughly bottom portion of the outer case 130, the receiving area of the electrode assembly 110 may be formed in both of the first outer case 131 and the second outer case 132 and the fused region 133 may be formed at a roughly central portion of the outer case 130.

In order to make the flexible battery 1 to be flexibly warped, the outer case 130 includes a metal layer 131a in the form of a thin film having a first surface and a second surface, a first insulation layer 131b formed on the first surface of the metal layer 131a and a second insulation layer 131c formed on the second surface of the metal layer 131a. The metal layer 131a may be made of one selected from the group consisting of aluminum, copper, nickel and stainless steel. In addition, the first insulation layer 131b may be a thermally adhesive layer, which may be made of a denatured polyolefin resin such as casted polypropylene (CPP) or a tercopolymer of polypropylene, butylenes and ethylene. In addition, the second insulation layer 131c may be made of polyethylene terephthalate (PET) or nylon. Here, the fused region 133 may be formed on the outer portion of the assembly 110 in such a manner that the first insulation layer 131b of the first outer case 131 and a first insulation layer (not shown) of the second outer case 132 are thermally adhered to each other.

In such a manner, embodiments of the present invention provide the flexible battery 1 that can be designed in various forms, that is, that can be warped in many ways.

In particular, the flexible battery 1 according to some embodiments of the present invention has an aspect ratio in a range of 10:1 to 100. That is to say, a thickness or a width of the flexible battery 1 is longer than a length thereof. Therefore, the flexible battery 1 according to embodiments of the present invention may be housed in various modified receiving regions, rather than in a conventional battery receiving region.

For example, a variety of curved receiving regions, including receiving regions shaped of a triangle, a rectangle, a pentagon, a hexagon, a trapezoid, a circle, an ellipse, a spiral, a meander, a serration, and a sinusoid, are formed in the external set and the flexible battery 1 according to embodiments of the present invention can be received in the receiving regions.

Therefore, according to embodiments of the present invention, the receiving region of the external set occupied by the flexible battery 1, does not restrict the design of the external set or the architecture of a circuit, so that the external set may have a wider variety of shapes and may be further miniaturized, slimmer and lighter in weight.

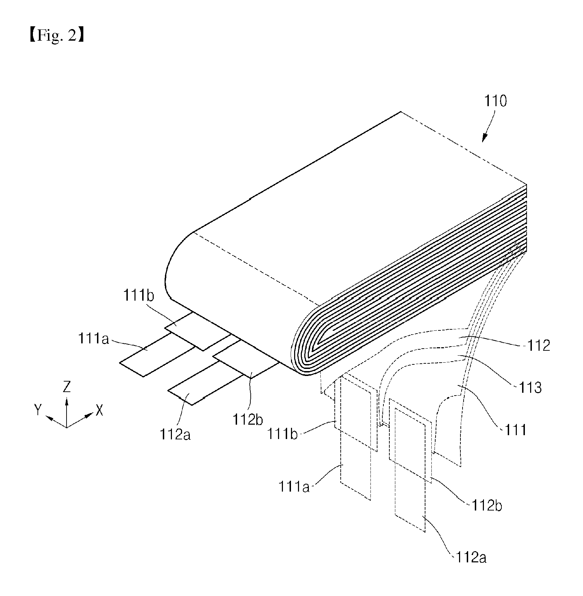

Fig. 2 is a partially enlarged perspective view illustrating an electrode assembly of the flexible battery according to an embodiment of the present invention.

As illustrated in Fig. 2, the electrode assembly 110 may be formed by being wound in the first direction using the second direction as a winding shaft. That is to say, the first electrode plate 111, the second electrode plate 112 and the separator 113 may be wound multiple times in the first direction using the second direction as a winding shaft. Hence, the first electrode plate (111), the second electrode plate (112), and the separator (113) may be wound around an axis parallel to the second direction. In such a manner, the first direction (e.g., the X axis) becomes the winding direction, thereby allowing the electrode assembly 110 to be more easily warped in the third direction (e.g., the Z axis).

In addition, the first tab 111a is electrically connected to the first electrode plate 111 and the second tab 112a is electrically connected to the second electrode plate 112. The first tab 111a and the second tab 112a may extend a predetermined length to the outside of the electrode assembly 110 in the first direction. That is to say, a direction in which the first tab 111a and the second tab 112a extend is substantially parallel to the first direction.

As described above, when the first tab 111a and the second tab 112a extend substantially parallel to the first direction, the flexible battery employing the first tab 111a and the second tab 112a extending in parallel may be more easily handled in the course of manufacturing the battery.

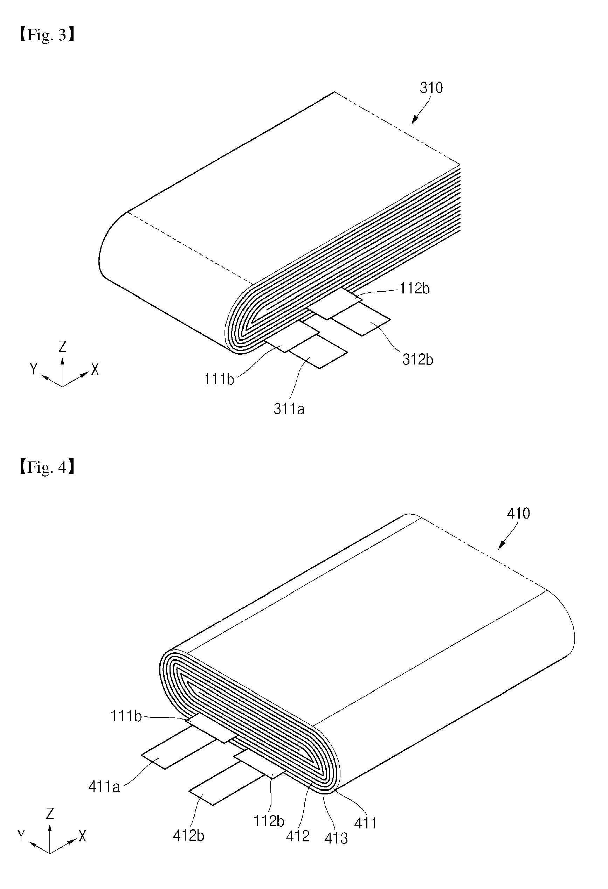

Fig. 3 is a partially enlarged perspective view illustrating an electrode assembly of a flexible battery according to another embodiment of the present invention.

As illustrated in Fig. 3, a first tab 311a and a second tab 312a may extend to the outside of the electrode assembly 310 in the second direction. That is to say, the first tab 311a and the second tab 312a extend in a direction substantially parallel to the second direction.

Fig. 4 is a partially enlarged perspective view illustrating an electrode assembly of a flexible battery according to still another embodiment of the present invention.

As illustrated in Fig. 4, the electrode assembly 410 may be formed by being wound in the second direction using the first direction as a winding shaft. That is to say, a first electrode plate 411, a second electrode plate 412 and a separator 413 may be wound multiple times in the second direction using the first direction as a winding shaft. Hence, the first electrode plate (111), the second electrode plate (112), and the separator (113) are wound around an axis parallel to the first direction. As described above, when the first direction is used as the winding shaft, widths of the first electrode plate 411, the second electrode plate 412 and the separator 413 increase, thereby facilitating alignment of the first electrode plate 411, the second electrode plate 412 and the separator 413.

In addition, the first tab 411a and the second tab 412a may extend to the outside of the electrode assembly 410 in the first direction. That is to say, the first tab 411a and the second tab 412a extend in a direction substantially parallel to the first direction. Of course, in some cases, the first tab 411a and the second tab 412a may also extend in a direction substantially parallel to the second direction.

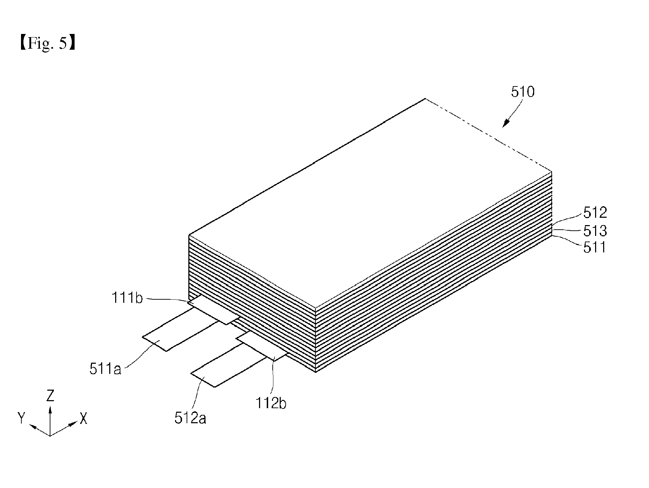

Fig. 5 is a partially enlarged perspective view illustrating an electrode assembly of a flexible battery according to still another embodiment of the present invention.

As illustrated in Fig. 5, the electrode assembly 510 may be provided in the form of a stack. That is to say, a first electrode plate 511, a second electrode plate 512 and a separator 513 interposed therebetween may be stacked to a predetermined thickness in the third direction perpendicular to the first direction and the second direction.

In addition, the first electrode plate 511 and the second electrode plate 512 may extend to the outside of the electrode assembly 510 in the first direction. In some cases, the electrode plate 511 and the second electrode plate 512 may extend in a direction parallel to the second direction.

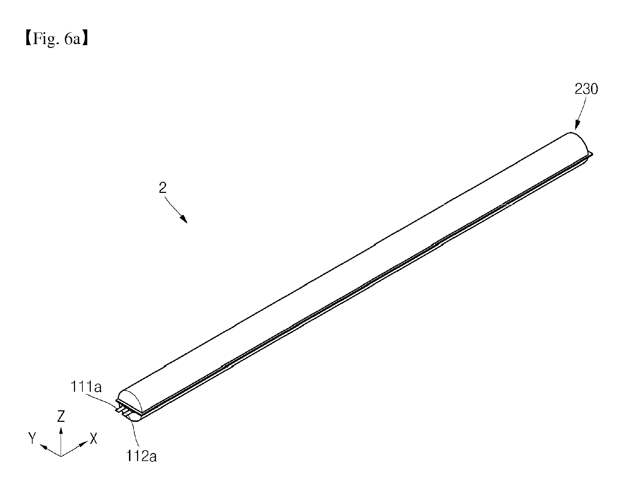

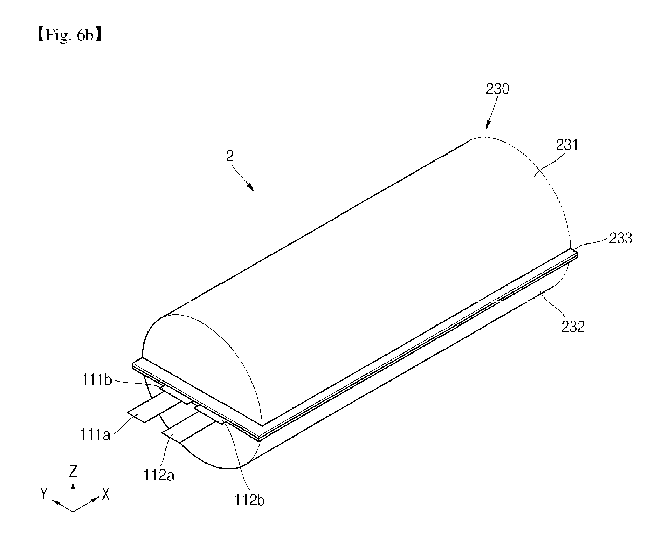

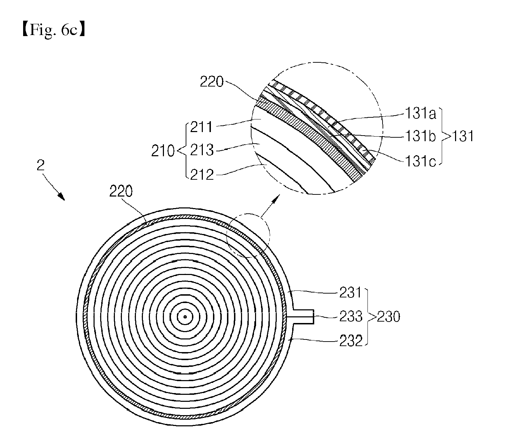

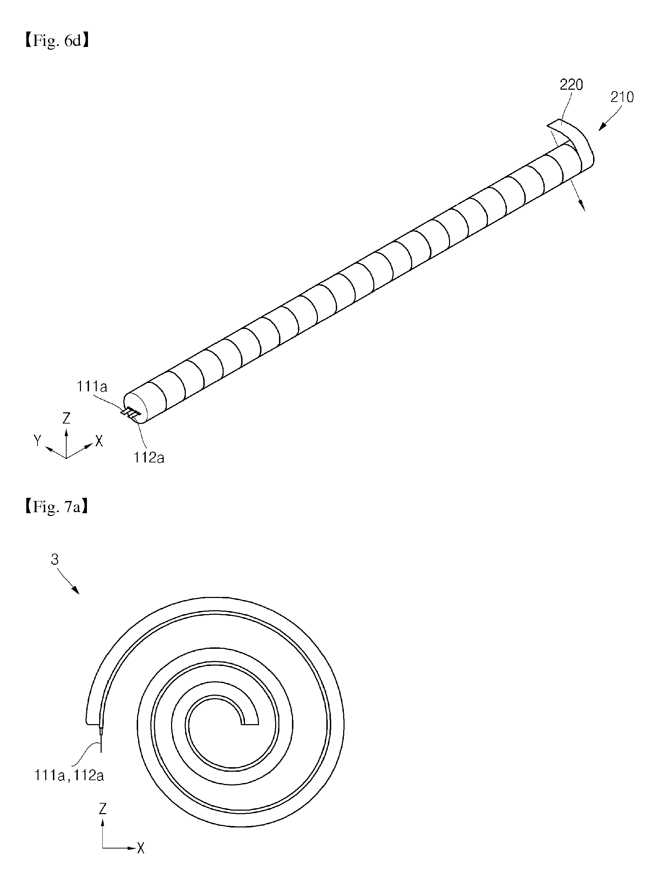

Figs. 6a to 6c are a perspective view, a partially enlarged perspective view, and a cross-sectional view illustrating a flexible battery according to still another embodiment of the present invention, and Fig. 6d is a perspective view illustrating an electrode assembly and a sealing member in the flexible battery according to still another embodiment of the present invention.

Here, the flexible battery 2 shown in Figs. 6a to 6d are substantially the same as the flexible battery 1 shown in Figs. 1a to 1d in view of configurations and materials, and the following description will focus on differences between the flexible batteries 1 and 2.

As illustrated in Figs. 6a to 6d, the flexible battery 2 according to an embodiment of the present invention includes an electrode assembly 210, a sealing member 220 and an outer case 230. Here, since the electrode assembly 210 is substantially cylindrical, the sealing member 220 and the outer case 230 are also substantially cylindrical.

To this end, the electrode assembly 210 may be formed by being wound in the second direction using the first direction as a winding shaft. That is to say, the first electrode plate 211, the second electrode plate 212 and the separator 213 interposed therebtween may be wound multiple times in the second direction (e.g., the Y axis) in substantially cylindrical forms using the first direction (e.g., the X axis) as a winding shaft, thereby completing the cylindrical electrode assembly 210.

Therefore, unlike the flexible battery 1 shown in Fig. 1a, the flexible battery 2 shown in Fig. 6a can be easily warped not only in the third direction (e.g., the Z axis) but also in the first direction (e.g., the X axis) and/or the second direction (e.g., the Y axis) perpendicular to the third direction.

Accordingly, the flexible battery 2 may be warped in various manners, that is, in a 2D manner and a 3D manner.

Figs. 7a to 7m are plan views illustrating two-dimensional warp of a flexible battery according to still another embodiment of the present invention.

Here, the flexible battery used for the illustrated warp (i.e. shape) is the same as that shown in Figs. 1a to 1d. In addition, the warp of the flexible battery 1 is made in the 2D manner on a surface formed by the first direction (e.g., the X axis) and the third direction (e.g., the Z axis), but embodiments of the present invention are not limited thereto.

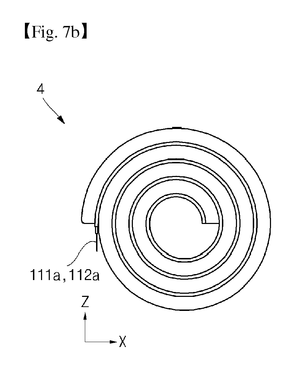

As illustrated in Figs. 7a and 7b, flexible batteries 3 and 4 may be bent in forms of spirals not in contact with each other or spirals in contact with each other. Here, a tab (a first tab or a second tab) may be positioned on the outermost end or the innermost end of the flexible battery 3 or 4.

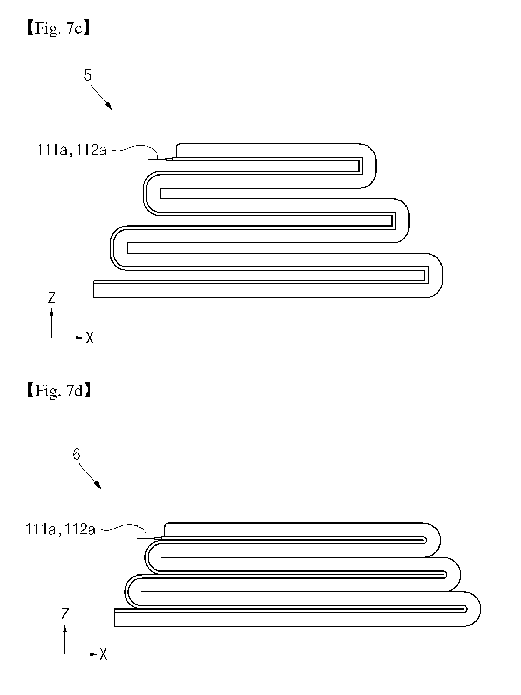

As illustrated in Figs. 7c and 7d, flexible batteries 5 and 6 may be bent in forms of meanders not in contact with each other or spirals in contact with each other.

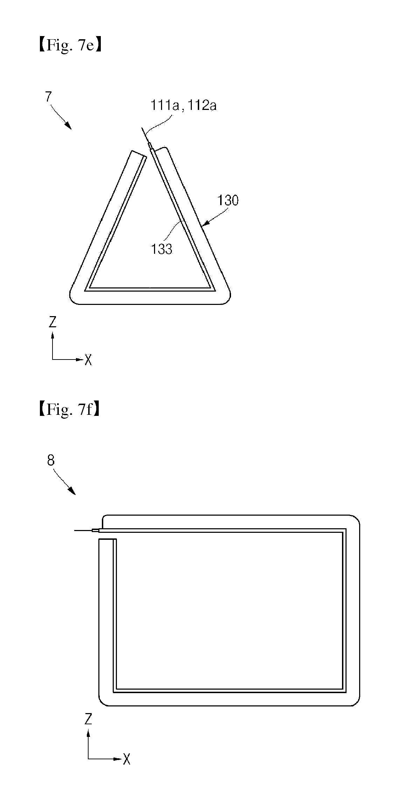

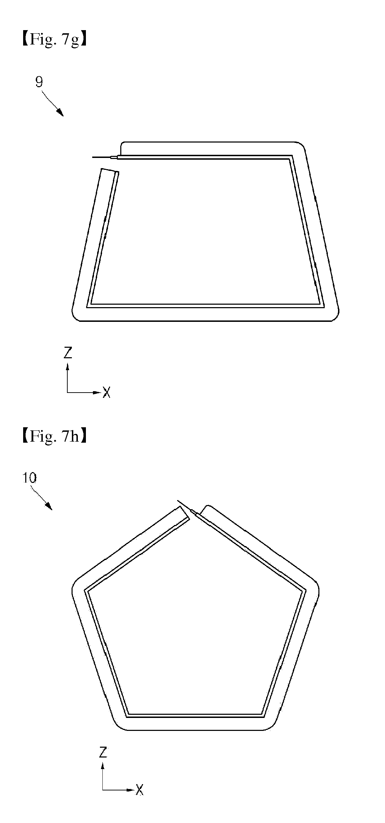

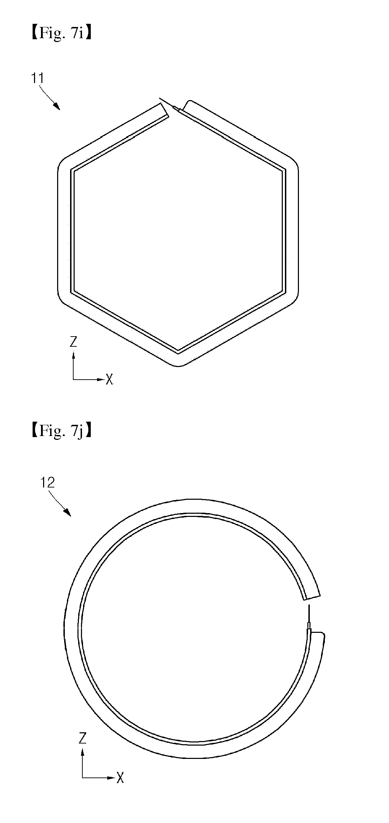

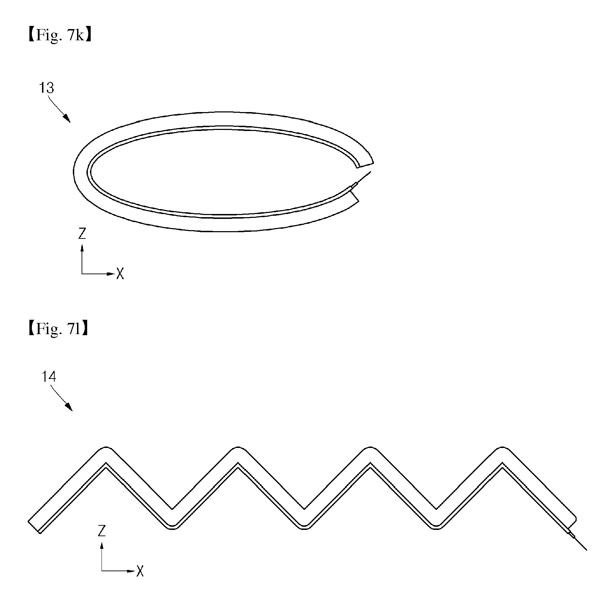

As illustrated in Figs. 7e, 7f, 7g, 7h, 7i, 7j and 7k, flexible batteries 7, 8, 9, 10, 11, 12 and 13 may be bent in forms of a triangle, a rectangle, a trapezoid, a pentagon, a hexagon, a circle, and an ellipse, respectively. Here, the fused region 133 is formed to be relatively close to one side of the outer case 130 in view of the thickness of the outer case 130, the fused region 133 is preferably positioned in a region having a small radius of curvature to allow the battery to be easily warped, but embodiments of the present invention are not limited thereto.

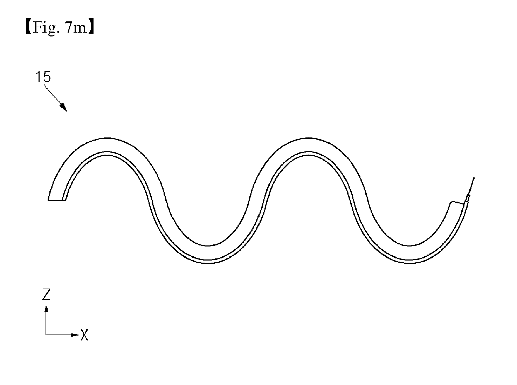

As illustrated in Figs. 7l and 7m, flexible batteries 14 and 15 may be warped in forms of a serration and a sinusoid (a cosine wave).

Additionally, the flexible battery according to embodiments of the present invention can be designed in various forms according to space characteristics or limitation of the external set. However, embodiments of the present invention are not limited regarding the forms of warps of the flexible battery to those illustrated herein.

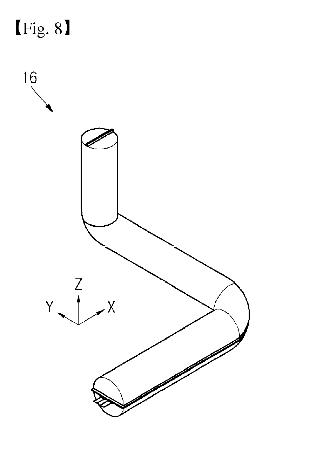

Fig. 8 plan views illustrating three-dimensional warp of a flexible battery according to still another embodiment of the present invention.

Here, the flexible battery 2 used for the illustrated warp is the same as that shown in Figs. 6a to 6d. In addition, the warp of the flexible battery 2 is made in the 3D manner on a surface formed by the first direction (e.g., the X axis) and the second direction (e.g., the Y axis) and a surface formed by the second direction (e.g., the Y axis) and the third direction (e.g., the Z axis), but embodiments of the present invention are not limited thereto. That is to say, the warp of the flexible battery 16 may also be made on a surface formed by the first direction (e.g., the X axis) and the third direction (e.g., the Z axis).

As described above, the flexible battery 16 according to an embodiment of the present invention can be freely warped not only in the 2D manner but also in the 3D manner, thereby allowing the flexible battery 16 to be more easily adopted to the warp without being hindered by space characteristics or limitation of the external set.

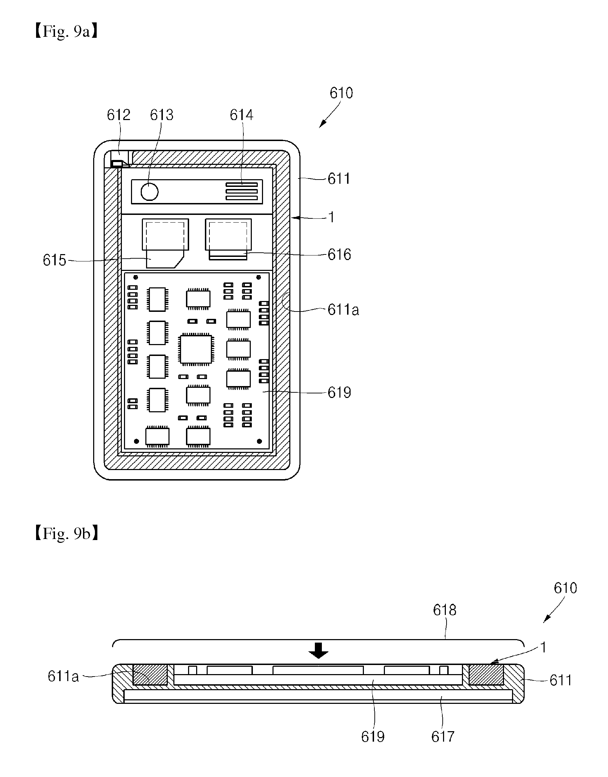

Figs. 9a and 9b are a rear view and a cross-sectional view illustrating an external set having a flexible battery according to an embodiment of the present invention mounted therein.

As illustrated in Figs. 9a and 9b, the flexible battery 1 may be received in an extra receiving region, different from the conventional battery receiving region. For example, an extra receiving region 611a is provided, the extra receiving region 611a having a substantially rectangular plane along the perimeter of a housing 611 forming an external set 610, and the flexible battery 1 may be received in the extra receiving region 611a. Of course, a circuit board 619, for example, may be positioned in the conventional battery receiving region, thereby providing the external set 610 that is further miniaturized and has a wider variety of forms than in the conventional case.

In Fig. 9, undefined reference numeral 612 denotes a protective circuit module electrically connected to the flexible battery 1, undefined reference numeral 613 denotes a camera module, undefined reference numeral 614 denotes a speaker module, undefined reference numeral 615 denotes a USIM chip, undefined reference numeral 616 denotes an external memory device, undefined reference numeral 617 denotes a display device, and undefined reference numeral 618 denotes a protection cover. The illustrated external set 610 may be, for example, a smart phone, but embodiments of of the present invention are not limited thereto.

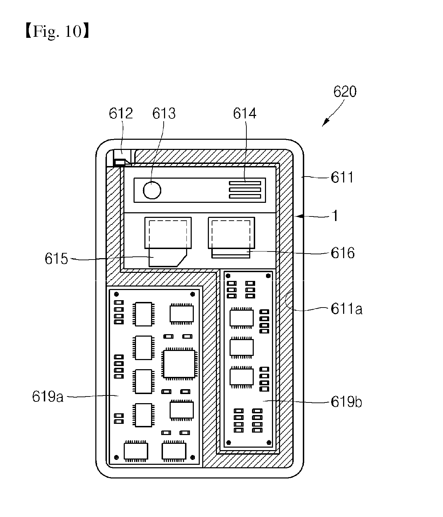

Fig. 10 is a rear view illustrating another external set having a flexible battery according to an embodiment of the present invention mounted therein.

As illustrated in Fig. 10, an extra receiving region 611a is provided, the extra receiving region 611a having a substantially closed curve along the perimeter and the inside of a housing 611 forming an external set 620, and the flexible battery 1 may be received in the extra receiving region 611a. In addition, circuit boards 619a and 619b may further be provided inside or outside the flexible battery 1.

The receiving type of the flexible battery 1 is provided only for illustration, and the flexible batteries 2 to 15 illustrated in Figs. 7a to 7m may also be received in the external set in a 2D manner. Further, the flexible battery 16 illustrated in Fig. 8 may be received in the external set in a 3D manner. Furthermore, the flexible battery according to the embodiments of present invention may also be received in the external set in various manners not illustrated herein.

As discussed above, embodiments of the invention provide a flexible battery comprising: a electrode assembly comprising a first electrode plate, a second electrode plate and a separator interposed between the first electrode plate and the second electrode plate; wherein the electrode assembly is longer in a first direction than in a second direction. In some embodiments, a sealing member can be arranged around the electrode assembly, and an outer case can surrounding the electrode assembly and the sealing member. In some embodiments, the flexible battery is bent to form a shape suitable for conforming to a shape of a receiving region in an electronic device. In some embodiments, the flexible battery can be more easily bent in a third direction than the first and second directions.

Embodiments of the present invention can also provide an electronic device comprising: a receiving region for a battery; and a flexible battery according to any of the above mentioned embodiments, in which the flexible battery is bent so as to conform to the shape of the receiving region. In some embodiments, the receiving region is arranged to surround electronic components in the electronic device.

While the secondary battery of the invention has been described in connection with a certain exemplary embodiments, it will be understood by those skilled in the art that the invention is not limited to the disclosed embodiment, but rather is intended to cover various modifications included within the scope of the appended claims and equivalents thereof.

## Claims

1. A flexible battery comprising:
a electrode assembly (110) comprising a first electrode plate (111), a second electrode plate (112) and a separator (113) interposed between the first electrode plate (111) and the second electrode plate (112);
a sealing member (120) arranged around the electrode assembly (110); and
an outer case (130) surrounding the electrode assembly (110) and the sealing member (120);
wherein the electrode assembly (110) is longer in a first direction than in a second direction.

2. A flexible battery according to claim 1, wherein an aspect ratio of a length of the electrode assembly (110) in the first direction to a width of the electrode assembly (110) in the second direction is from 10:1 to 100:1.

3. A flexible battery according to claim 2, wherein the electrode assembly (110) has a thickness in a third direction, and wherein a ratio of the width of the electrode assembly (110) in the second direction to the thickness of the electrode assembly (110) in the third direction is in a range of 0.5:1 to 1.5:1;
optionally wherein the ratio of the width of the electrode assembly (110) in the second direction to the thickness of the electrode assembly in the third direction is 1:1.

4. A flexible battery according to any preceding claim, wherein the flexible battery is more easily bent in a third direction than the first and second directions.

5. A flexible battery according to any preceding claim, wherein the sealing member (120) is arranged to be wrapped around the electrode assembly (110) in a direction crossing the first direction;
optionally wherein the sealing member (120) is wrapped around the electrode assembly (110) so as to make a right angle, an obtuse angle or an acute angle with respect to the first direction.

6. A flexible battery according to any preceding claim, further comprising:
a first tab (111a) connected to the first electrode plate (111) and a second tab (112a) connected to the second electrode plate (112).

7. A flexible battery according to claim 6, wherein the first and second tabs (111a, 112a) are arranged to extend to an outside of the outer case (130); and
the first and second tabs (111a, 112a) are arranged to extend to the outside of the outer case (130) in the first direction or in the second direction.

8. A flexible battery according to any preceding claim, wherein:
the first electrode plate (111), the second electrode plate (112), and the separator (113) are wound around an axis parallel to the second direction; or
the first electrode plate (111), the second electrode plate (112), and the separator (113) are stacked in a third direction perpendicular to the first and second directions; or the first electrode plate (111), the second electrode plate (112), and the separator (113) are wound around an axis parallel to the first direction.

9. A flexible battery according to any preceding claim, wherein
the first electrode plate (111) includes a first current collector and a first active material; and
the second electrode plate (112) includes a second current collector and a second active material;
optionally wherein the thicknesses of the first and second current collectors are less than 20 µm.

10. A flexible battery according to claim 9, wherein the first current collector and/or the second current collector is a mesh type or a foam type current collector.

11. A flexible battery according to claim 9 or 10, wherein the first current collector and/or the second current collector comprises a plurality of through holes, optionally wherein the through holes have a diameter of 1 to 200 µm.

12. A flexible battery according to any preceding claim, wherein the flexible battery is bent to form a shape suitable for conforming to a shape of a receiving region in an electronic device.

13. A flexible battery according to any preceding claim wherein the flexible battery is bent in the form of one of a triangle, a rectangle, a pentagon, a hexagon, a trapezoid, a circle, an ellipse, a spiral, a meander, a serration, and a sinusoid.

14. An electronic device comprising:
a receiving region for a battery; and
a flexible battery according to any one of claims 1 to 13, wherein the flexible battery is bent so as to conform to the shape of the receiving region.

15. An electronic device according to claim 14, wherein the receiving region is arranged to surround electronic components in the electronic device.
